# EUROPEAN PATENT SPECIFICATION

(11) **EP 2 980 568 B1**
(45) Date of publication and mention of the grant of the patent: **28.02.2018**
(21) Application number: 14774124.3
(22) Date of filing: 10.03.2014
(51) Int. Cl.: B01D 19/00, G01N 15/00, G01N 27/07

(54) **DEVICE AND METHOD FOR DETECTING BUBBLES OF A VACUUM CONTAINER FOR MANUFACTURING COSMETIC CONTENTS, AND RECORDING MEDIUM FOR STORING A PROGRAM CODE FOR EXECUTING SAID METHOD WITH A COMPUTER**
VORRICHTUNG UND VERFAHREN ZUR ERKENNUNG VON BLASEN IN EINEM VAKUUMBEHÄLTER ZUR HERSTELLUNG VON KOSMETISCHEN INHALTEN UND AUFZEICHNUNGSMEDIUM ZUM SPEICHERN EINES PROGRAMMCODES ZUR AUSFÜHRUNG DIESES VERFAHRENS MIT EINEM COMPUTER
DISPOSITIF ET PROCÉDÉ DE DÉTECTION DE BULLES DANS UN CONTENANT À VIDE DESTINÉ À LA FABRICATION DE CONTENUS COSMÉTIQUES, ET SUPPORT D'ENREGISTREMENT POUR LE STOCKAGE D'UN CODE DE PROGRAMME POUR METTRE EN OEUVRE CE PROCÉDÉ AU MOYEN D'UN ORDINATEUR

(30) Priority: 29.03.2013 KR 20130034122
(43) Date of publication of application: 03.02.2016
(73) Proprietor: Amorepacific Corporation, Seoul 100-230 (KR)
(72) Inventor: PARK, JongMook, Seoul 100-230 (KR)
(74) Representative: Eder, Michael
(86) International application number: PCT/KR2014/001943
(87) International publication number: WO 2014/157853

(56) References cited:
- EP-A2- 0 353 830
- DE-U1- 29 815 083
- JP-A- H04 273 022
- JP-A- H05 215 755
- JP-A- H08 319 599
- JP-A- 2005 307 069
- JP-A- 2008 182 899
- JP-U- H0 714 368
- KR-A- 19980 051 267

## Description

### [Technical Field]

The present invention relates to a device for detecting bubbles of a vacuum container for manufacturing cosmetic contents, in which bubbles filling a vacuum container can be detected through electrode bar assemblies becoming electrically conductive by using bubbles as a medium when the bubbles fill the vacuum container at a predetermined level or more through providing a plurality of electrode bar assemblies in the vacuum container, in which a positive power source is connected to one electrode bar assembly and a negative power source is connected to the remaining electrode bars or the negative power source is connected to one electrode bar assembly and the positive power source is connected to the remaining the electrode bars.

### [Background Art]

In general, when food is produced by using water including a large amount of dissolved oxygen, the produced food easily becomes spoiled or decomposed by the dissolved oxygen included in the water, thus cases of mass food poisoning occur.

To solve these causes and problems, Korean Registered Patent No. 7213 (Jul. 4, 1995) 'Apparatus for removing dissolved oxygen underwater' has been proposed for efficiently removing the dissolved oxygen included in the water.

The proposed apparatus for removing dissolved oxygen generates vacuum pressure while the water filled in a degassing tank is discharged to the outside through a downcast pipe, gathers the water at the upper part of the degassing tank by degassing the water while the water is inserted into the degassing tank through a water supplying nozzle provided at an upper part of the degassing tank, and obtains a predetermined amount of degassed water by discharging the degassed oxygen to the outside by operating a vacuum pump.

In addition, the degassed water filled in the degassing tank is repeatedly returned in the tank by using a pump to transform all of the water filled in the water tank into degassed water, however, in the process of supplying the water in the water tank into the degassing tank by operating a separate pump to maintain the degassing tank again in a vacuum state while completely discharging degassed oxygen remaining in the degassing tank, the degassing operation is briefly stopped, so the degassing rate becomes lower, thereby making the apparatus inefficient.

Meanwhile, for another method for removing dissolved oxygen in water, Korean Registered Patent No. 302478 (Jul. 3, 2001) 'Apparatus for removing dissolved oxygen in water by active carbon fiber catalyst' (hereinafter, called 'Apparatus for removing dissolved oxygen') has been proposed. The apparatus for removing dissolved oxygen includes a water tank, a water pump, a flow rate controller, a dissolved oxygen concentration measurement unit, an active carbon fiber catalyst reactor, an ion exchange resin tower, a filter device, and a water quality monitoring and controlling device to remove the dissolved oxygen in the water and prevent corrosion in metallic materials. However, when the water, in which impurities in the treated water is removed by ions in the ion exchange resin tower, passes through the filter device, the impurities removed from the treated water in the process of removing turbidity components becomes filtered in the filter device, so the filtering rate becomes lower, thus the filter device needs to be cleaned regularly.

A vacuum degassing apparatus fills a predetermined amount of cleaning liquid into a sealed degassing tank and removes air in the upper space of the tank by a vacuum pump to distribute and discharge the dissolved air in the cleaning liquid.

Meanwhile, the vacuum degassing apparatus is well used in process for making cosmetics, in the process of making the cosmetics, when water and oil components are bonded while particles are cut into small particles by rotating a homomixer at a high speed to bond the water and the oil components in the emulsification process, air enters into the content, and in this case, the content is made into a vacuum state to discharge the air in the content into the atmosphere.

However, in this case, bubbles are created when the air in the cosmetic content is discharged into the atmosphere and the bubbles are not easily broken due to the viscosity, thus the bubbles move up to an upper layer part of the manufacturing tank. The bubbles moved upward flows over a vacuum line.

In other words, the air entering into the content in the process of discharging the air in the degassing apparatus to the outside is extract to the outside as bubbles, and the bubbles flows up over the vacuum line, so a worker is required to stand by, and if the bubble flows up over the vacuum line when the worker is not standing by, the vacuum line becomes contaminated, and the overflown content is cooled and hardened such that the vacuum line becomes blocked while damaging the content. EP0353830 A2 discloses a probe for the control of foam build up in a fermenter, which probe comprises a guard electrode, first and second insulators separated by the guard electrode, a detecting electrode separated from the guard electrode by the first insulator, and a plug and socket for connecting the probe to a power source.

A culture tank capable of filling culture fluid for culturing cell is shown in JP2008182899 A. When the electric current exceeds a threshold-value between a pair of electrodes, it is judged that the height of the foam layer reached a predetermined value.

JP2005307069 A discloses a vacuum vessel for manufacturing liquid compositions, such as the shampoo and hair conditioner.

### [Disclosure]

### [Technical Problem]

The present invention is provided to solve the problems described above, and an objective is to prevent, in advance, bubbles from flowing up to a vacuum line by disposing multiple conductive sensors, detecting the bubbles expanding to a predetermined height in a container before the bubbles become overflowed by using the sensor, and alerting a worker when the bubble is detected.

### [Technical Solution]

According to claim 1, a device for detecting bubbles of the present invention includes: a vacuum container (100) installed to remove air from the cosmetic contents and including a space part having a cylindrical shape or a polygonal shape to accommodate the cosmetic contents therein; a stirring device (10) including an electrical motor (11) installed at an upper part of the vacuum container and a stirrer (12) coupled to the electrical motor, in which the electrical motor (11) is operated to operate the stirrer (12) so that air existing in the cosmetic contents in the vacuum container is degassed to outside; a sensor part (20) installed at an upper end of the vacuum container and including two or more electrode bar assemblies (21) and a humidity sensor part, in which the electrode bar assemblies include an electrode bar (21-1) and an insulator (21-2) surrounding an exterior of the electrode bar (21-1), one of the electrode bar assemblies (21) is connected to a positive power source and remaining electrode bar assemblies are connected to a negative power source, or one of the electrode bar assemblies (21) is connected to the negative power source and remaining electrode bar assemblies are connected to the positive power source, and the humidity sensor part (22) is installed at the upper end of the vacuum container to check a humidity in the vacuum container; a controller (30) that reads information from the sensor part (20) and commands to output an alarm signal by determining that bubbles are filled up to an upper part of the vacuum container when the electrode bar assemblies (21) become conductive, and when a conduction signal of the electrode bar assemblies is received while a humidity value measured by the humidity sensor is equal to or higher than a reference value, to disregard the conduction signal and output a state of the humidity value being equal to or higher than the reference value; and an alarm generating part (40) to output an alarm to outside according to the command of the controller (30) so that a worker may appropriately manipulate the vacuum container. According to claim 2, a method for detecting bubbles of the present invention includes: providing a vacuum container (100), a stirring device (10), a sensor part (20), a controller (30), and an alarm generating part (40); operating the stirring device of the vacuum container; receiving a conduction signal of electrode bar assemblies constituting the sensor part; and receiving a humidity value in the vacuum container from a humidity sensor part constituting the sensor part; analyzing a signal received from the sensor part and outputting an alarm signal through the alarm generating part when a conduction signal is received from electrode bar assemblies while humidity is lower than or equal to a reference value; and analyzing the signal received from the sensor part, disregarding the conduction signal and outputting a state of the humidity value being equal to or higher than the reference value when the conduction signal of the electrode bar assemblies is received while the humidity value measured by the humidity sensor is equal to or higher than the reference value. According to claim 3, a recording medium of the present invention includes: a program code to operate a stirring device of a vacuum container; a program code to receive a conduction signal of electrode bar assemblies constituting a sensor part; and a program code to receive a humidity value in the vacuum container from a humidity sensor part constituting the sensor part; a program code to analyze a signal received from the sensor part and output an alarm signal through an alarm generating part when the conduction signal is received from electrode bar assemblies while the humidity value is lower than or equal to a reference value; and a program code to analyze the signal received from the sensor part, disregard the conduction signal and output a state of the humidity value being equal to or higher than the reference value when the conduction signal of the electrode bar assemblies is received while the humidity value measured by the humidity sensor is equal to or higher than the reference value.

### [Advantageous Effects]

As described above, an embodiment of the present invention prevents bubbles from flowing up to a vacuum line by disposing multiple conductive sensors, detecting the bubbles expanding to a predetermined height in a container before the bubbles become overflowed by using the sensor, and alerting a worker when the bubble is detected.

### [Description of Drawings]

FIG. 1 is a view showing a configuration of a device for detecting bubbles of the present invention.
FIG. 2 is a view showing and embodiment of detection bubbles of the present invention.
FIG. 3 is a block diagram showing a circuit configuration employed in the present invention.

### [Best Mode]

### [Mode for Invention]

Hereinafter, the operating principles of exemplary embodiments of the present invention will be described in detail with reference to the accompanying drawings and descriptions. While the present invention has been particularly shown and described by embodiments with reference to the accompanied drawings, it should not be interpreted in any way to limit the scope of the present invention.

In addition, when describing embodiments of the present invention, detailed descriptions of well-known functions and structures incorporated herein may be omitted when they make the subject matter of the present invention unclear. Terminologies used in this specification are selected from general terminologies by taking the functions thereof into consideration and they may vary depending on the intentions of operators having ordinary skill in the art, customers and appearance of new technologies. In specific cases, the terminologies may be arbitrarily selected by applicant. In this case, the meaning of the terminologies will be described in corresponding parts of the specification.

In addition, to efficiently describe the technical components constituting the present invention, the functional components already provided in each system, or system components generally known in the art of the present invention will be omitted if possible in exemplary embodiments of the present invention described below, and the description will be made while focusing on the functional components required additionally for the present invention.

Those skilled in the art in the field of the present invention will clearly understand the functions of the components used in prior arts among the omitted components which are not shown, and the relationships between the omitted component and the components added for the present invention will be clearly understood.

In addition, hereinafter, in the embodiments, the terms may be modified for the purpose of convenience or clarity of the explanation so that those skilled in the art in the field of the present invention can clearly understand, however, it should not be interpreted in any way to limit the scope of the present invention.

The embodiments are given to provide complete disclosure of the invention and to provide thorough understanding of the invention to those skilled in the art, and the scope of the invention is limited only by the accompanying claims.

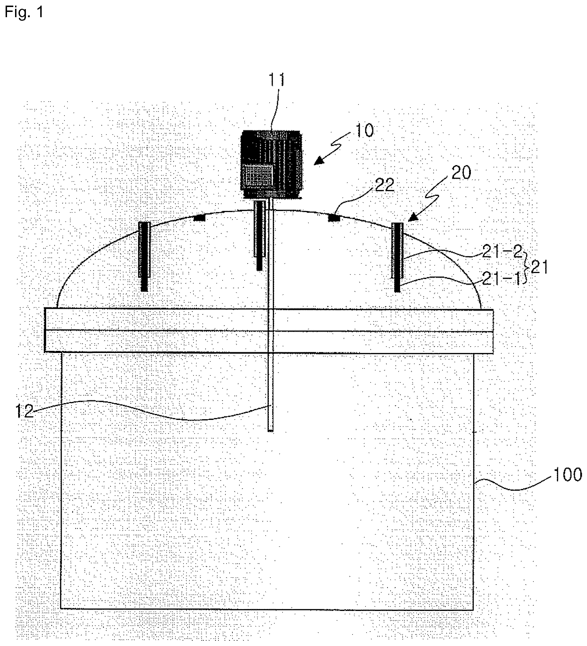

FIG. 1 is a view showing a configuration of a device for detecting bubbles of the present invention.

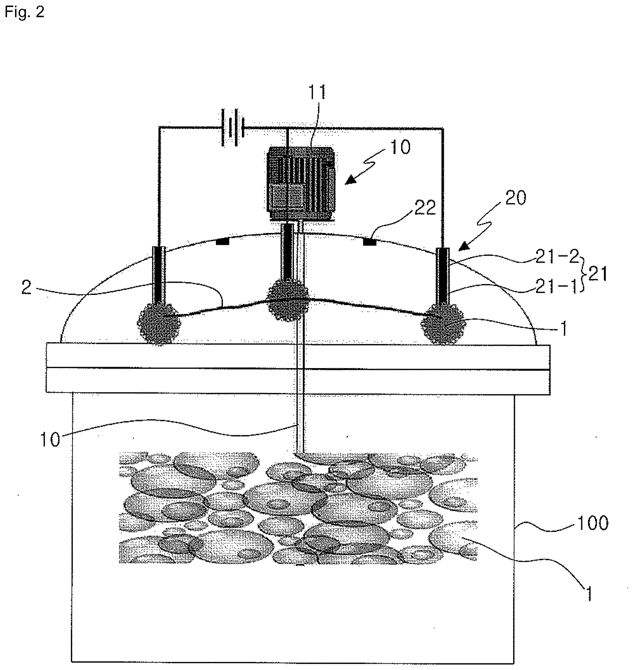

FIG. 2 is a view showing an embodiment of detecting bubbles of the present invention.

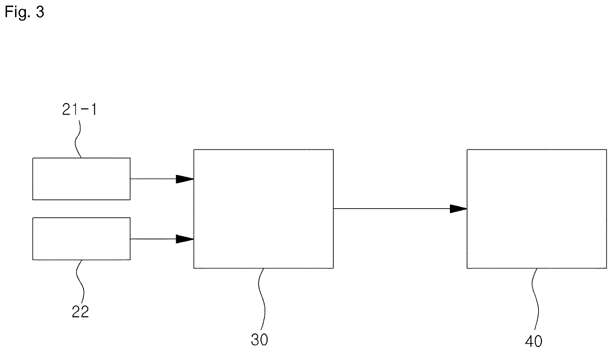

FIG. 3 is a block diagram showing a circuit configuration employed in the present invention.

Components of the present invention include a vacuum container 100, a stirring device 10, a sensor part 20, a controller 30, and an alarm generating part 40.

The vacuum container 100 is installed to remove air from the cosmetic contents and includes a space part having a cylindrical shape or a polygonal shape to accommodate the cosmetic contents therein.

The stirring device 10 includes an electrical motor 11 installed at an upper part of the vacuum container and a stirrer 12 coupled to the electrical motor, in which the electrical motor 11 is operated to operate the stirrer 12 so that air existing in the cosmetic contents in the vacuum container is degassed to outside.

The sensor part 20 is installed at an upper end of the vacuum container and includes two or more electrode bar assemblies 22, in which the electrode bar assemblies include an electrode bar 21-1 and an insulator 21-2 surrounding an exterior of the electrode bar 21-1, and one of the electrode bar assemblies 21 is connected to a positive power source and remaining electrode bar assemblies are connected to a negative power source.

In addition, a humidity sensor 22 is installed at an upper end of the vacuum container to check humidity in the vacuum container.

The controller 30 reads information from the sensor part 20 and commands to output an alarm signal by determining that bubbles are filled up to an upper part of the vacuum container when the electrode bar assemblies 21 become conductive.

The alarm generating part 40 allows a worker to appropriately manipulate the vacuum container by outputting an alarm to the outside according to a command of the controller 30.

For the humidity sensor 22 employed in the present invention, a polymer membrane humidity sensor is employed. The polymer membrane humidity sensor signifies humidity sensors using polymer as a dehumidification agent, in which electrical resistance changes, and the polymer is not required to be conductive, just a polymer material that becomes conductive when water molecules are absorbed. For the polymer material, ion exchange resin, graft polymer, copolymerized hydrophilic and hydrophobic materials, etc. are used.

In addition, the polymer membrane humidity sensor is a dehumidification agent, in which the impedance varies according to the humidity. The polymer membrane humidity sensor is formed by depositing a humidity sensor electrode including a gold electrode and an electrode including silver-palladium into a copolymerization solution, in which a monomer including halide and quaternary ammonium salt, a vinyl monomer including alkylsilane and one or more vinyl comonomers are copolymerized, and by forming a dehumidification layer through heating or crosslinking at room temperature under the existence of humidity.

For the monomer including the halide and the quaternary ammonium salt included in the copolymer used for the dehumidification layer, a tertiary amine selected from the group consisting of 2-(N, N-dimethylaminoethyl)acrylate, 2-(N, N-dimethylaminoethyl)methacrylate, 2-(N, N-diethylaminoethyl)acrylate, 2-(N, N-diethylaminoethyl)methacrylate, 4-vinylpyridine, 2-vinylpyridine, allylamine, diallylamine, triallylamine and a mixture of two or more thereof is reacted with the halide selected from a group consisting of a compound, in which an alkyl group having a carbon number of 1 to 18 includes one halogen (chlorine, bromine, iodine), a compound, in which a cyclocompound having a carbon number of 5 to 6 includes one or more halogen, a,a'-dichloro-ortho-xylene, a,a'-dichloro-meta-xylene, a,a'-dichloro-para-xylene, a,a'-dibromo-ortho-xylene, a,a'-dibromo-meta-xylene, a,a'-dibromo-para-xylen or a mixture of two or more thereof to fabricate the monomer. Otherwise, a monomer including the quaternary ammonium salt may be used.

In addition, the vinyl monomer including the alkylsilane used in the copolymer used in the dehumidification layer may be prepared by using (meth)acryloyl type of chemical formula 1 or vinylsilane type of chemical formula 2. In addition, a monomer of chemical formula 3, which is prepared by a reaction with alkylhalide including 2-(N, N-dimethylaminoethyl)acrylate, 2-(N, N-dimethylaminoethyl)methacrylate, 2-(N, N-diethylaminoethyl)acrylate, 2-(N, N-diethylaminoethyl)methacrylate, 4-vinylpyridine, 2-vinylpyridine, allylamine, diallylamine, triallylamine and alkylsilane.

In the present invention, the sensor part having the feature and structure as described above is employed to sense the bubbles 1 generated in the vacuum container and notify to the outside. In the present invention, at least two electrode bar assemblies 21 are provided, in which a positive electrode is connected to one of the electrode bar assemblies and a negative electrode is connected to another one of the electrode bar assemblies. In addition, when the bubbles 1 are filled between the electrode bar assemblies 21, each of the electrode bar assemblies 21 become conductive so that an electrical flow is generated, thus the controller 30 may identify the bubbles filling up to the upper part of the vacuum container.

In an embodiment of the present invention, three electrode bar assemblies 21 are provided, the positive electrode is connected to one of the electrode bar assemblies 21 at the middle, and the negative electrode is connected to two electrode bar assemblies 21 disposed at side surfaces.

Definitely, the number of electrode bar assemblies 21 may be diversified, and in the present invention, about three is appropriate.

In the present invention, when the bubbles 1 are generated and filled up to a predetermined height, the electrode bar assemblies 21 becomes electrically conductive with each other, so the bubbles may be easily sensed.

In other words, in the prior art, because the existence of the bubbles are identified by using a water level sensor, even when the bubbles are momentarily generated, the water lever sensing sensor identifies this and outputs an alarm signal, so the worker is required to take appropriate measures due to the alarm signal even though the bubbles did not yet fill up the vacuum container.

In other words, measures such as manipulating the speed of the stirring device 10 are required to be taken only when the bubbles 1 are filled up to a predetermined amount in the vacuum container 100, and when the water level sensing sensor is used, even when the momentarily generated bubbles adheres to the water level sensing sensor, the alarm signal is outputted, thereby becoming inconvenient to the worker.

Therefore, in the present invention, multiple electrode bar assemblies 21 are provided such that the alarm signal is outputted only when the bubbles 1 are filled up in the vacuum container 100 by a predetermined amount. In addition, the positive electrode is connected to the electrode bar assembly 21 at the middle, and the negative electrode is connected to remaining electrode bar assemblies 21 disposed at the sides and because the alarm signal is outputted only when the electrode bar assemblies 21 are electrically conductive when the bubbles are filled up in the vacuum container, thereby becoming convenient to the worker because the worker is not required to reside every time.

In addition, in the present invention, the humidity sensor 22 is additionally installed. When the highly humid state in the vacuum container 100 is maintained continuously, moisture is congealed on the electrode bar assemblies 21, so leakage current flows between the electrode bar assemblies 21 making the electrode bar assemblies become electrically conductive, thus malfunction may occur. Therefore, in the present invention, the humidity sensor 22 is provided such that, when the humidity is maintained equal to or higher than a reference value (for example, 95%) from the sensing result of the humidity sensor, the result is alerted in advance so that the worker may clean the moisture of the electrode bar assemblies 21 to minimize the malfunction of the electrode bar assemblies.

In other words, because the electrode bar assemblies 21 may become conductive due to the leakage current in an excessive humidity state, when a conduction signal is received from the electrode bar assemblies 21 in the excessive humidity state equal to or higher than a predetermined level, the conduction signal is disregarded, and only the excessive state is notified to the worker so that the excessive state may be resolved.

Hereinafter, the entire operation the present invention will be described.

In the present invention, the cosmetic contents are inserted in the vacuum container 100, then the stirring device 10 installed in the vacuum container is operated to remove the gas in the cosmetic contents to the outside.

In this case, the cosmetic content may be discharged to the outside in a bubble form while the air in the cosmetic contents is discharged to the outside.

The bubbles 12 automatically burst as time pass, so only air may be discharged to the outside, however, when the viscosity is high, the bubbles may not burst and the bubbles 1 may be continuously generated while filling the inside of the vacuum container 100.

In the present invention, multiple electrode bar assemblies 21 are provided in the vacuum container 100, and when the bubbles 1 fill up between the electrode bar assemblies 21, the electrode bar assemblies 21 and the bubbles become conductive to form a conduction line 2 such that the electrode bar assemblies 21 become conductive and the electrical signal is outputted.

Accordingly, the controller 30 determines that the bubbles 1 fill up the vacuum container 100 and commands to output the alarm signal so that the worker may take appropriate measures.

In other words, when the bubbles 1 simply increase and touch one of the electrode bar assemblies 21, the alarm signal is not outputted, and when a large amount of bubbles 1 are generated to fill up the vacuum container 100, the electrode bar assemblies 21 become mutually electrically conductive by using the bubbles 1 as medium to generate an electrical flow and the controller identifies the electrical flow, thus, only when the bubbles 1 fill the vacuum container, the alarm signal is outputted, so errors are prevented, thereby making a more simple working environment possible.

In addition, in the present invention, the humidity sensor 22 is added such that, because the electrode bar assemblies 21 may be conductive by the leakage current in the case when the humidity is equal to or higher than a predetermined amount is continuously maintained, the alarm signal is outputted so that the electrode bar assemblies 21 may be cleaned. In addition, when the conduction signal of the electrode bar assemblies 21 is outputted when the humidity is equal to or higher than the reference value, the conduction signal is disregarded, thereby preventing output of the alarm signal by the malfunction.

In this case, the state in which the humidity is oversaturated equal to or higher than the reference value is preferably notified through a separate alarm signal.

### [List of Reference signs]

1: bubbles
2: conduction line
10: stirring device
20: sensor part
21: electrode bar assemblies
22: humidity sensor part
30: controller
40: alarm generating part
100: vacuum container

## Claims

1. A device for detecting bubbles of a vacuum container for manufacturing cosmetic contents, the bubble detection device comprising:
a vacuum container (100) installed to remove air from the cosmetic contents and including a space part having a cylindrical shape or a polygonal shape to accommodate the cosmetic contents therein;
a stirring device (10) including an electrical motor (11) installed at an upper part of the vacuum container and a stirrer (12) coupled to the electrical motor, in which the electrical motor (11) is operated to operate the stirrer (12) so that air existing in the cosmetic contents in the vacuum container (100) is degassed to outside;
a sensor part (20) installed at an upper end of the vacuum container (100) and including two or more electrode bar assemblies (21) and a humidity sensor part (22), in which the electrode bar assemblies (21) include an electrode bar (21-1) and an insulator (21-2) surrounding an exterior of the electrode bar (21-1), one of the electrode bar assemblies (21) is connected to a positive power source and remaining electrode bar assemblies (21) are connected to a negative power source, or one of the electrode bar assemblies (21) is connected to the negative power source and remaining electrode bar assemblies (21) are connected to the positive power source, and the humidity sensor part (22) is installed at the upper end of the vacuum container (100) to check a humidity in the vacuum container (100); a controller (30) that reads information from the sensor part (20) and commands to output an alarm signal by determining that bubbles are filled up to an upper part of the vacuum container (100) when the electrode bar assemblies (21) become conductive, and when a conduction signal of the electrode bar assemblies (21) is received while a humidity value measured by the humidity sensor is equal to or higher than a reference value, to disregard the conduction signal and output a state of the humidity value being equal to or higher than the reference value; and
an alarm generating part (40) to output an alarm to outside according to the command of the controller (30) so that a worker may appropriately manipulate the vacuum container (100).

2. A method for detecting bubbles of a vacuum container (100) for manufacturing cosmetic contents, the method comprising:
providing a vacuum container (100), a stirring device (10), a sensor part (20), a controller (30), and an alarm generating part (40);
operating the stirring device (10) of the vacuum container (100); receiving a conduction signal of electrode bar assemblies (21) constituting the sensor part (20); receiving a humidity value in the vacuum container (100) from a humidity sensor part (22) constituting the sensor part (20); analyzing a signal received from the sensor part (20) and outputting an alarm signal through the alarm generating part (40) when a conduction signal is received from electrode bar assemblies (21) while humidity is lower than or equal to a reference value; and
analyzing the signal received from the sensor part (20), disregarding the conduction signal and outputting a state of the humidity value being equal to or higher than the reference value when the conduction signal of the electrode bar assemblies (21) is received while the humidity value measured by the humidity sensor is equal to or higher than the reference value.

3. A recording medium storing a program code for executing a method for detecting bubbles of a vacuum container (100) for manufacturing cosmetic contents, the recording medium comprising:
a program code to operate a stirring device (10) of a vacuum container (100); a program code to receive a conduction signal of electrode bar assemblies (21) constituting a sensor part (20); a program code to receive a humidity value in the vacuum container (100) from a humidity sensor part constituting the sensor part (20); a program code to analyze a signal received from the sensor part (20) and output an alarm signal through an alarm generating part (40) when the conduction signal is received from electrode bar assemblies (21) while the humidity value is lower than or equal to a reference value; and
a program code to analyze the signal received from the sensor part (20), disregard the conduction signal and output a state of the humidity value being equal to or higher than the reference value when the conduction signal of the electrode bar assemblies (21) is received while the humidity value measured by the humidity sensor is equal to or higher than the reference value.

## Patentansprüche

1. Vorrichtung zum Erkennen von Blasen eines Vakuumbehälters zum Herstellen von Kosmetikinhalt, wobei die Blasenerkennungsvorrichtung Folgendes umfasst:
einen Vakuumbehälter (100), der dazu installiert ist, Luft aus dem Kosmetikinhalt zu entfernen, und einschließend einen Raumteil mit einer zylindrischen Form oder einer polygonalen Form zum Aufnehmen des Kosmetikinhalts darin;
eine Rührvorrichtung (10) mit einem elektrischen Motor (11), der an einem oberen Teil des Vakuumbehälters installiert ist, und einem Rührer (12), der an den elektrischen Motor gekoppelt ist, wobei der elektrische Motor (11) betrieben wird, um den Rührer (12) zu betreiben, so dass Luft, die im Kosmetikinhalt im Vakuumbehälter (100) vorliegt, nach außen entlüftet wird;
einen Sensorteil (20), der an einem oberen Ende des Vakuumbehälters (100) installiert ist und zwei oder mehr Elektrodenleistenbaugruppen (21) und einen Feuchtigkeitssensorteil (22) einschließt, wobei die Elektrodenleistenbaugruppen (21) eine Elektrodenleiste (21-1) und einen Isolator (21-2) einschließt, der eine Außenseite der Elektrodenleiste (21-1) umgibt, eine der Elektrodenleistenbaugruppen (21) mit einer positiven Leistungsquelle verbunden ist und übrige Elektrodenleistenbaugruppen (21) mit einer negativen Leistungsquelle verbunden sind, oder eine der Elektrodenleistenbaugruppen (21) mit der negativen Leistungsquelle verbunden ist und übrige Elektrodenleistenbaugruppen (21) mit der positiven Leistungsquelle verbunden sind, und der Feuchtigkeitssensorteil (22) am oberen Ende des Vakuumbehälters (100) installiert ist, um eine Feuchtigkeit im Vakuumbehälter (100) zu prüfen;
eine Steuereinrichtung (30), die Informationen aus dem Sensorteil (20) und Befehle ausliest, um ein Alarmsignal auszugeben, indem sie bestimmt, dass Blasen den Vakuumbehälter (100) bis zu einem oberen Teil desselben füllen, wenn die Elektrodenleistenbaugruppen (21) leitend werden, und wenn ein Leitsignal der Elektrodenleistenbaugruppen (21) empfangen wird, während ein Feuchtigkeitswert, der von dem Feuchtigkeitssensor gemessen wird, gleich oder größer als ein Referenzwert ist, das Leitsignal zu ignorieren und einen Status des Feuchtigkeitswerts auszugeben, der gleich oder größer als der Referenzwert ist; und
einen Alarmerzeugungsteil (40) zum Ausgeben eines Alarms nach außen gemäß dem Befehl der Steuereinrichtung (30), so dass eine Arbeitskraft den Vakuumbehälter (100) in geeigneter Weise behandeln kann.

2. Verfahren zum Erkennen von Blasen eines Vakuumbehälters (100) zum Herstellen von Kosmetikinhalt, wobei das Verfahren Folgendes umfasst:
Bereitstellen eines Vakuumbehälters (100), einer Rührvorrichtung (10), eines Sensorteils (20), einer Steuereinrichtung (30) und eines Alarmerzeugungsteils (40);
Betreiben der Rührvorrichtung (10) des Vakuumbehälters (100);
Empfangen eines Leitsignals von Elektrodenleistenbaugruppen (21), die den Sensorteil (20) bilden;
Empfangen eines Feuchtigkeitswerts im Vakuumbehälter (100) von einem Feuchtigkeitssensorteil (22), der den Sensorteil (20) bildet;
Analysieren eines Signals, das von dem Sensorteil (20) empfangen wird, und Ausgeben eines Alarmsignals durch den Alarmerzeugungsteil (40), wenn ein Leitsignal von Elektrodenleistenbaugruppen (21) empfangen wird, während die Feuchtigkeit kleiner oder gleich einem Referenzwert ist; und
Analysieren des Signals, das von dem Sensorteil (20) empfangen wird, wobei das Leitsignal ignoriert wird, und Ausgeben eines Status des Feuchtigkeitswerts, der gleich oder größer als der Referenzwert ist, wenn das Leitsignal der Elektrodenleistenbaugruppen (21) empfangen wird, während der Feuchtigkeitswert, der von dem Feuchtigkeitsensor gemessen wird, gleich oder größer als der Referenzwert ist.

3. Aufzeichnungsmedium zum Speichern eines Programmcodes zum Ausführen eines Verfahrens zum Erkennen von Blasen eines Vakuumbehälters (100) zum Herstellen von Kosmetikinhalt, wobei das Aufzeichnungsmedium Folgendes umfasst:
einen Programmcode zum Betreiben einer Rührvorrichtung (10) eines Vakuumbehälters (100);
einen Programmcode zum Empfangen eines Leitsignal von Elektrodenleistenbaugruppen (21), die einen Sensorteil (20) bilden;
einen Programmcode zum Empfangen eines Feuchtigkeitswerts im Vakuumbehälter (100) von einem Feuchtigkeitssensorteil, der den Sensorteil (20) bildet;
einen Programmcode zum Analysieren eines Signals, das von dem Sensorteil (20) empfangen wird, und Ausgeben eines Alarmsignals durch einen Alarmerzeugungsteil (40), wenn das Leitsignal von Elektrodenleistenbaugruppen (21) empfangen wird, während der Feuchtigkeitswert kleiner oder gleich einem Referenzwert ist; und
einen Programmcode zum Analysieren des Signals, das von dem Sensorteil (20) empfangen wird, und Ausgeben eines Status des Feuchtigkeitswerts, der gleich oder größer als der Referenzwert ist, wenn das Leitsignal der Elektrodenleistenbaugruppen (21) empfangen wird, während der Feuchtigkeitswert, der von dem Feuchtigkeitssensor gemessen wird, gleich oder größer als der Referenzwert ist.

## Revendications

1. Dispositif de détection de bulles d'un récipient sous vide pour la fabrication de contenus cosmétiques, le dispositif de détection de bulles comprenant :
un récipient sous vide (100) installé pour éliminer l'air des contenus cosmétiques et incluant une partie d'espace ayant une forme cylindrique ou une forme polygonale pour loger les contenus cosmétiques en son sein ;
un dispositif d'agitation (10) incluant un moteur électrique (11) installé au niveau d'une partie supérieure du récipient sous vide et un agitateur (12) couplé au moteur électrique, dans lequel le moteur électrique (11) est mis en oeuvre pour actionner l'agitateur (12) de sorte que l'air existant dans les contenus cosmétiques dans le récipient sous vide (100) est dégazé à l'extérieur ;
une partie capteur (20) installée au niveau d'une extrémité supérieure du récipient sous vide (100) et incluant deux ensembles barre d'électrode (21) ou plus et une partie capteur d'humidité (22), dans lequel les ensembles barre d'électrode (21) incluent une barre d'électrode (21-1) et un isolateur (21-2) entourant un extérieur de la barre d'électrode (21-1), un des ensembles barre d'électrode (21) est connecté à une source d'alimentation positive et les ensembles barre d'électrode restants (21) sont connectés à une source d'alimentation négative, ou un des ensembles barre d'électrode (21) est connecté à la source d'alimentation négative et les ensembles barre d'électrode restants (21) sont connectés à la source d'alimentation positive, et la partie capteur d'humidité (22) est installée au niveau de l'extrémité supérieure du récipient sous vide (100) pour la vérification d'une humidité dans le récipient sous vide (100) ;
un dispositif de commande (30) qui lit des informations provenant de la partie capteur (20) et qui commande pour délivrer en sortie un signal d'alarme en déterminant que des bulles sont remplies jusqu'à une partie supérieure du récipient sous vide (100) lorsque les ensembles barre d'électrode (21) deviennent conducteurs et, lorsqu'un signal de conduction des ensembles barre d'électrode (21) est reçu alors qu'une valeur d'humidité mesurée par le capteur d'humidité est égale ou supérieure à une valeur de référence, pour ne pas tenir compte du signal de conduction et pour délivrer en sortie un état de la valeur d'humidité égale ou supérieure à la valeur de référence ; et
une partie de génération d'alarme (40) pour délivrer en sortie une alarme à l'extérieur selon la commande du dispositif de commande (30) de sorte qu'un travailleur peut manipuler de façon appropriée le récipient sous vide (100).

2. Procédé de détection de bulles d'un récipient sous vide (100) pour la fabrication de contenus cosmétiques, le procédé comprenant :
l'utilisation d'un récipient sous vide (100), d'un dispositif d'agitation (10), d'une partie capteur (20), d'un dispositif de commande (30) et d'une partie de génération d'alarme (40) ;
la mise en oeuvre du dispositif d'agitation (10) du récipient sous vide (100) ;
la réception d'un signal de conduction des ensembles barre d'électrode (21) constituant la partie capteur (20) ;
la réception d'une valeur d'humidité dans le récipient sous vide (100) depuis une partie capteur d'humidité (22) constituant la partie capteur (20) ;
l'analyse d'un signal reçu de la partie capteur (20) et la sortie d'un signal d'alarme par le biais de la partie de génération d'alarme (40) lorsqu'un signal de conduction est reçu des ensembles barre d'électrode (21) alors que l'humidité est inférieure ou égale à une valeur de référence ; et
l'analyse du signal reçu de la partie capteur (20), la non-prise en compte du signal de conduction et la sortie d'un état de la valeur d'humidité étant égale ou supérieure à la valeur de référence lorsque le signal de conduction des ensembles barre d'électrode (21) est reçu alors que la valeur d'humidité mesurée par le capteur d'humidité est égale ou supérieure à la valeur de référence.

3. Support d'enregistrement stockant un code de programme pour exécuter un procédé de détection de bulles d'un récipient sous vide (100) pour la fabrication de contenus cosmétiques, le support d'enregistrement comprenant :
un code de programme pour mettre en oeuvre un dispositif d'agitation (10) d'un récipient sous vide (100) ;
un code de programme pour recevoir un signal de conduction d'ensembles barre d'électrode (21) constituant une partie capteur (20) ;
un code de programme pour recevoir une valeur d'humidité dans le récipient sous vide (100) depuis une partie capteur d'humidité constituant la partie capteur (20) ;
un code de programme pour analyser un signal reçu de la partie capteur (20) et pour délivrer en sortie un signal d'alarme par le biais d'une partie de génération d'alarme (40) lorsque le signal de conduction est reçu des ensembles barre d'électrode (21) alors que la valeur d'humidité est inférieure ou égale à une valeur de référence ; et
un code de programme pour analyser le signal reçu de la partie capteur (20), pour ne pas tenir compte du signal de conduction et pour délivrer en sortie un état de la valeur d'humidité étant égale ou supérieure à la valeur de référence lorsque le signal de conduction des ensembles barre d'électrode (21) est reçu alors que la valeur d'humidité mesurée par le capteur d'humidité est égale ou supérieure à la valeur de référence.
